# EUROPEAN PATENT SPECIFICATION

(11) **EP 0 912 219 B1**
(45) Date of publication and mention of the grant of the patent: **06.08.2003**
(21) Application number: 97911170.5
(22) Date of filing: 02.10.1997
(51) Int. Cl.: B01D 17/04, C02F 1/04, B01D 5/00, B01D 3/06, B01D 1/00

(54) **A SEPARATOR DEVICE FOR REMOVING POLLUTANTS FROM WASTE WATER**
TRENNVORRICHTUNG ZUR ENTFERNUNG VON VERUNREINIGUNGEN AUS ABWASSER
DISPOSITIF DE SEPARATION SERVANT A ENLEVER DES POLLUANTS DEPUIS DES EAUX USEES

(30) Priority: 24.04.1997 IT TO970352
(43) Date of publication of application: 06.05.1999
(73) Proprietor: T.I.B. S.N.C., 10091 Alpignano (IT)
(72) Inventor: GRISO, Paolo, I-10040 Givoletto (IT)
(74) Representative: Robba, Pierpaolo
(86) International application number: EP9705428
(87) International publication number: WO98047595

(56) References cited:
- EP-A- 0 269 191
- DE-A- 4 117 944
- DE-C- 84 625
- DE-C- 470 584
- DE-U- 8 914 167
- DE-U- 9 406 255
- US-A- 2 475 639
- US-A- 3 957 589
- US-A- 4 345 971
- US-A- 4 477 356

## Description

### Technical Field

The present invention refers to treatments of waste waters before they are discharged into the sewer system, and more particularly to a device for purifying liquid wastes.

Preferably such liquid wastes are oil emulsions, i.e. water containing a dispersion of one or more immiscible liquid, such as oil.

More particularly the invention is concerned with a device for separating the oil from watery emulsions of oils, where a portion of the heat dissipated in the separation process is used for heating the surronding environment.

In the following the invention will be disclosed with particular reference to the separation of oil(s) from an aqueous emulsion used in machine tools, however the invention is not to be considered limited to such preferred application.

It is known that in order to achieve a good machining in machine tools using aqueous (watery) emulsions, these latter have to be periodically replaced. Since this kind of waste water cannot be directly discharged into the sewage system, the disposal of such emulsions is often committed to highly specialized concerns, with high costs for the transport, the disposal and (when required) the treatment before the disposal.

US-A-4477356 discloses an apparatus for separating oil from an oil-water emulsion by evaporating water as steam, using a heated recirculating portion of the emulsion.

### Objects of the Invention

It is an object of the present invention to overcome the above mentioned drawbacks by providing a device by which it is possible to separate the oil or the pollutant from water so that the water can be reused, while at the same time consenting to recover for heating purposes a part of the electric energy employed in the separation process.

An additional advantage of the invention resides in that since the average oil percentage in the emulsion waters used in machining tools is comprised between 1% and 6%, the amount of wastes to be disposed will become equal to or sligthly larger than such percentage.

### Disclosure of the Invention

The separator device according to the invention provides for the evaporation and the subsequent condensing of a portion of the water in the liquid waste to be treated before being disposed, with the heat released by the condensation being used for heating the environment surrounding the device. Such liquid waste is contained in a vessel and can be, for example, an aqueous emulsion of oils or other substances, water discharged from painting plants and the like.

The main characteristic of a device according to the invention are recited in claim 1.

Additional advantages of the separator device of the invention are the following:
- a reduction of the area required for stocking special wastes;
- a recovery of the water present in the emulsion;
- a recovery of water that does not contain limestone.

### Brief Description of the Drawings

The invention will now be disclosed in detail with particular reference to the attached drawings, illustrating a non limiting embodiment of the invention, in which:
- Fig. 1 is a cross-section view of a separator device of the invention;
- Fig. 2 is a detailed view of the cooling path provided in the cover of the separator device.

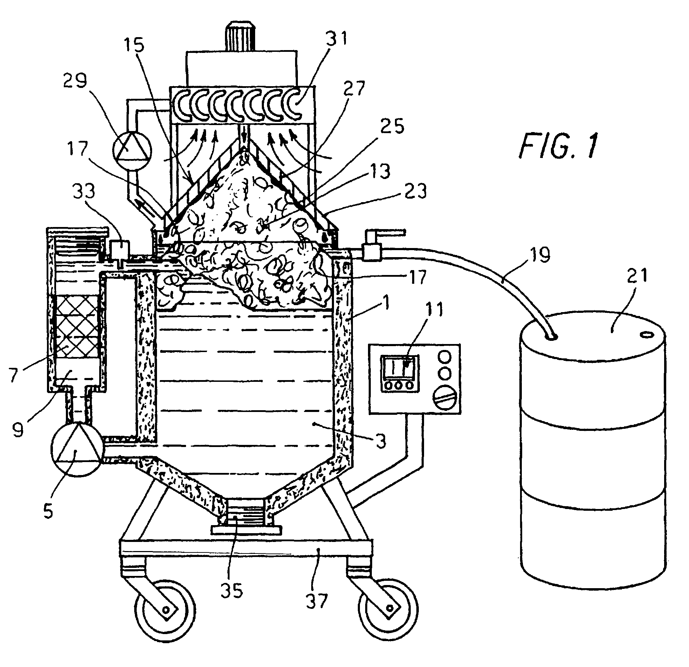

As clearly illustrated in Figure 1, a separating device according to the invention substantially comprises a thermally insulated tank 1, containing an amount of the liquid waste to be treated, and a conical cover member 15 (the construction of which will be better disclosed later) also acting as a condensing surface. A unit heater 31 or similar device for heating the environment is mounted on the top of the cover 15.

The device is further provided with an external heating chamber 9 that is connected to a lower outlet duct in the tank 1 through a pump 5 and to an upper inlet duct through a valve (not shown) for spraying a heated portion of the liquid 3 into the upper space of tank 1 above the liquid level and generating water vapor 13. The heating chamber 9 has thermally insulated walls and incorporates a heating resistance or resistor 7 for heating the liquid passing through the heating chamber 9.

The heat exchanger of the unit heater 31 communicates with the inside of the conical cover member 15 and a second pump 29 and suitable pipings are provided for returning the liquid to the heat exchanger.

The device is further equipped with a control unit (see reference 11) and a wheeled supporting frame 37 or similar arrangement for moving the separator.

The tank has a generally cylindrical shape with a tapered bottom provided with a discharge or drain opening 35 closed by a threaded plug or similar device.

In the upper portion of the cylindrical tank 1 there is provided an inner annular gutter 17 located under the inner edges of the cover 15 and communicating with a drain port. The drain port can be coupled to an end of a water drain hose the other end of which is inserted in a can 21 or other suitable vessel.

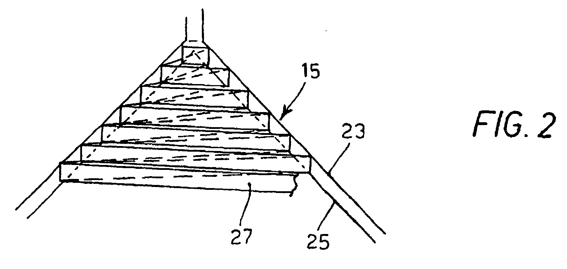

The cover member 15 is formed by two adjacent metal cones 23, 25, spaced from each other to define an inner space in which a cooling coil 27, shaped as a concentric spiral is located, see also Fig. 2. The upper end of coil 27 is connected to the heat exchanger of the unit heater 31, while the lower end is connected to the pump 29. This way a flow of coolant, preferably water, is circulated by the pump 29 in the closed loop formed by the coil 27, the pump 29 and the heat exchanger of the unit heater 31. Such coolant can absorb the heat released by the vapor 13 condensing on the (cold) surface of cover 15 while promoting the condensation thereof and will heat the surrounding environment.

In use the tank 1 is partially filled with the polluted liquid 3 to be treated (such as an oil-water emulsion and the like), and a portion of the liquid in the tank 1 is sucked through the lower port by the pump 5 and forced to pass through the resistance 7 located within the heating chamber 9, to be heated to a temperature set by the operator through a thermostat 11.

After the liquid in chamber 9 has reached the selected temperature it will be sprayed back into the upper space of tank 1, above the liquid level. This will generate a large amount of water vapor 13 that rises upwards and will condensate on the inner surface of the cover 15 that is maintained colder than the vapor by the circulation of the coolant of the unit heater 31. Thanks to conical or tapered shape of the cover 15, the condensated droplets will run down and will be collected in the peripheral gutter 17, acting as a water trap, from which the purified water will be transferred into the can 21 for being reused.

The function of the unit heater 31 is to discharge outside the tank 1 the heat released by the water vapor, and therefore to heat the operative environment. This way a fraction of the energy expended for the separation process is recovered.

A probe 33 is further provided downward of the heating chamber 9 for controlling the flow and the temperature of the liquid 3 to be returned into the tank 1 for being evaporated.

The following Tables 1 and 2 illustrate the results of analsis carried out on two samples of the purified water obtained in can 21 through the device of the invention. The sample of Table 1 was obtained by treating a water emulsion containing one oil only, whereas the sample of Table 2 *was* obtained by treating a water emulsion containing a mixture of oils.

**TABLE 1**

| | |
|---|---|
| Cd | < 0.01 |
| Ni | < 0.05 |
| Pb | < 0.05 |
| Cu | < 0.1 |
| Zn | < 0.3 |
| Aromatic organic solvents | < 0.05 |
| Settling materials (sediments) | < 0.1 |
| Non settling materials (suspensions) | < 10 |
| COD (mg/l O₂) | 880 |
| pH | 8.40 |
| Sulphates | < 1 |
| Chlorides | 1300 |
| Ammonia | 110 |
| Nitrites (N) | 0.07 |
| Nitrates (N) | < 0.1 |
| Mineral oils | < 0.5 |
| MBAS anionic surfactants | < 0.55 |
| PPAS surfactants | 0.65 |
| aliphatic aldehyides (formaldehyde) | 1.5 |

**TABLE 2**

| | |
|---|---|
| Cd | < 0.01 |
| Ni | < 0.05 |
| Pb | < 0.05 |
| Cu | < 0.1 |
| Zn | < 0.5 |
| Aromatic organic solvents | < 0.05 |
| Settling materials (sediments) | < 0.1 |
| Non settling materials (suspensions) | < 10 |
| COD (mg/l O₂) | 1800 |
| pH | 10.23 |
| Sulphates | < 1 |
| Chlorides | < 0.5 |
| Ammonia | 44 |
| Nitrites (N) | 0.07 |
| Nitrates (N) | < 0.1 |
| Mineral oils | < 0.5 |
| MBAS anionic surfactants | < 0.5 |
| PPAS surfactants | 0.6 |
| aliphatic aldehyides (formaldehyde) | 4 |

In both Tables, unless otherwise specified the amounts are in mg/l.

Although the so obtained purified waters are not directly dischargeable into the sewer system, such waters are nevertheless usable again in the working cycle of machine tools since all the oil content has been substantially removed, thus reducing the amount of the wastes to be disposed to a small fraction (usually 1-6%) of the water emulsion.

### Industrial Applicability

The invention is applicable in purifying polluted liquid wastes, such as for example water emulsions.

## Claims

1. A separator device for removing pollutants from waste water, **characterized in that** it comprises:
a thermally insulated tank (1), containing the liquid (3) to be treated and closed by a conical cover member (15) acting as a condensing surface, said tank (1) being further provided with a gutter (17) on the inner surface of said tank (1) for collecting the condensate that communicates with an outlet port;
an external heating chamber (9) connected to a lower outlet duct in said tank (1) through a first pump (5) and to an upper inlet duct in said tank (1) through spraying means for heating and spraying back a portion of said liquid (3) into the upper portion of said tank (1) to form a rising mass of water vapor (13);
a unit heater (31) comprising a heat exchanger with a coolant, mounted on the top of said cover (15) for heating the surrounding environment;
said separator being further **characterized in that** said cover incorporates a cooling coil (27) in which the coolant of said unit heater (31) is circulated, whereby a fraction of the energy expended for the separation process is used for heating the environment surrounding the device.

2. A device as claimed in claim 1, **characterized in that** said waste water is an oil-water emulsion.

3. A device as claimed in claim 1 or 2, **characterized in that** said cover member (15) is formed by two adjacent cones (23, 25) spaced from each other to define an inner space housing said cooling coil (27), shaped as a concentric spiral, one end of said cooling coil (27) being connected to the heat exchanger of the said unit heater( 31), while the other end is connected to a second pump (29) for circulating the coolant through the heat exchanger of heater (31).

4. A device as claimed in claims 1 to 3, **characterized in that** said external heating chamber (9) has thermally insulated walls and incorporates a resistor (7) for heating the liquid passing through the chamber (9).

5. A device as claimed in the preceding claims, **characterized in that** it comprises a temperature probe (33) downward of said heating chamber 9 for controlling the flow and the temperature of the liquid (3) to be returned to said tank (1).

6. A device as claimed in the preceding claims, **characterized in that** said tank (1) has a generally cylindrical shape with a tapered bottom provided with a discharge or drain opening (35) closed by a threaded plug or similar device.

7. A device as claimed in the preceding claims, **characterized in that** said tank (1) is mounted on a wheeled supporting frame (37).

## Patentansprüche

1. Trennvorrichtung zur Entfernung von Verunreinigun-gen aus Abwasser, **dadurch gekennzeichnet, dass** dieselbe folgende Teile umfasst:
- einen wärmeisolierten Tank (1), der die zu behandelnde Flüssigkeit (3) enthält und durch einen als Kondensfläche dienenden Deckelteil (15) geschlossen ist, wobei der Tank (1) ausserdem eine an der Innenfläche des Tanks (1) angeordnete, mit einer Auslassöffnung in Ver-bindung stehende Rinne (17) zum Auffangen des Kondenswassers aufweist,
- eine äussere Heizkammer (9), die über eine erste Pumpe (5) mit einem unteren Auslassrohr im Tank (1) und über Spritzmittel mit einem oberen Einlassrohr im Tank (1) verbunden ist, um einen Teil der Flüssigkeit (3) zu heizen und im oberen Teil des Tanks (1) zurückzuspritzen, so dass sich eine aufsteigende Wasserdampfmasse (13) bildet,
- eine im Oberteil des Deckels (15) angeordnete und einen Wärmeaustauscher mit Kühlmittel auf-weisende Heizeinheit (31),
- wobei die Trennvorrichtung ausserdem **dadurch gekennzeichnet ist, dass** im Deckel eine Kühl-schlange (27) eingebaut ist, in der das Kühlmittel der Heizeinheit (31) umläuft, und dass ein Teil der für das Trennverfahren verwendeten Energie zum Heizen der Umgebung der Vorrichtung benutzt wird.

2. Vorrichtung nach Anspruch 1, dadurch gekenn-zeichnet, dass das Abwasser eine Öl-Wasser-Emulsion ist.

3. Vorrichtung nach Anspruch 1 oder 2, **dadurch gekennzeichnet, dass** der Deckelteil (15) aus zwei in einem bestimmten Abstand nebeneinander liegen-den Kegeln (23, 25) besteht, um einen Innenraum zur Aufnahme der Kühlschlange (27) in Form einer konzentrischen Spirale zu bilden, wobei die Enden der Kühlschlange (27) jeweils mit dem Wärme-austauscher der Heizeinheit (31) und mit einer zweiten Pumpe (29) verbunden sind, um den Umlauf des Kühlmittels durch den Wärmeaustauscher der Heizeinheit (31) zu ermöglichen.

4. Vorrichtung nach einem der Ansprüche 1 bis 3, **dadurch gekennzeichnet, dass** die äussere Heiz-kammer (9) wärmeisolierte Wände hat und einen Widerstand (7) zum Heizen der durch die Kammer (9) fliessenden Flüssigkeit umfasst.

5. Vorrichtung nach einem der vorstehenden Ansprüche, **dadurch gekennzeichnet, dass** unterhalb der Heiz-kammer (9) ein Temperaturfühler (33) zur Kontrolle der Strömung und der Temperatur der zum Tank (1) zurückzufördernden Flüssigkeit (3) vorgesehen ist.

6. Vorrichtung nach einem der vorstehenden Ansprüche, **dadurch gekennzeichnet, dass** der Tank (1) im allgemeinen die Form eines Zylinders mit einem sich konisch verjüngenden Boden aufweist, der mit einer durch einen Schraubverschluss o.dgl. geschlossenen Auslass- oder Abflussöffnung (35) versehen ist.

7. Vorrichtung nach einem der vorstehenden Ansprüche, **dadurch gekennzeichnet, dass** der Tank (1) auf einem fahrbaren Traggestell (37) angeordnet ist.

## Revendications

1. Dispositif de séparation servant à enlever des polluants depuis des eaux usées, **caractérisé en ce qu'**il comprend:
- un réservoir thermiquement isolé (1) contenant le liquide (3) à traiter et fermé par un élément de couverture conique (15) ayant la fonction de surface de condensation, ledit réservoir (1) étant en outre pourvu d'une gouttière (17) sur la surface intérieure dudit réservoir (1) pour recueillir le condensat qui communique avec une porte de sortie;
- une chambre de chauffage externe (9) reliée à un canal de sortie inférieur dans ledit réservoir (1) par une première pompe (5) et à un canal d'entrée supérieur dans ledit réservoir (1) par des moyens de vaporisation pour chauffer et vaporiser à nouveau une fraction dudit liquide (3) dans la portion supérieure dudit réservoir (1) afin de former une masse montante de vapeur d'eau (13);
- une unité de chauffage (31), comprenant un échangeur de chaleur avec un fluide caloporteur, monté sur le sommet de ladite couverture (15) pour chauffer le milieu environnant;
- ledit dispositif étant en plus **caractérisé en ce que** ladite couverture incorpore une spirale de refroidissement (27) dans laquelle le fluide caloporteur de ladite unité de chauffage (31) est fait circuler, par moyen de laquelle une fraction de l'énergie dépensée pour le procédé de séparation est utilisée pour chauffer le milieu environnant l'appareil.

2. Dispositif selon la revendication 1, **caractérisé en ce que** lesdites eaux usées sont une émulsion de huile et eau.

3. Dispositif selon la revendication 1 ou 2, **caractérisé en ce que** ledit élément de couverture (15) est formé par deux cônes adjacents (23, 25) écartés l'un de l'autre pour définir un espace intérieur logeant ladite spirale de refroidissement (27), qui est en forme d'une spirale concentrique, une extrémité de ladite spiral étant reliée à l'échangeur de chaleur de ladite unité de chauffage (31), pendant que l'autre extrémité est reliée à une deuxième pompe (29) pour faire circuler le fluide caloporteur à travers l'échangeur de chaleur de l'unité de chauffage (31).

4. Dispositif selon les revendications de 1 à 3, **caractérisé en ce que** ladite chambre de chauffage externe (9) a des parois thermiquement isolées et incorpore une résistance (7) pour chauffer le liquide passant par la chambre (9).

5. Dispositif selon les revendications précédantes, **caractérisé en ce qu'**il comprend une sonde de température (33) en aval de ladite chambre chauffante (9) pour contrôler le flux et la température du liquide (3) à être ramené audit réservoir (1).

6. Dispositif selon les revendications précédantes, **caractérisé en ce que** ledit réservoir (1) a une forme substantiellement cylindrique avec un fond fuselé, pourvu d'une ouverture de décharge ou d'écoulement (35) fermée par un bouchon fileté ou un dispositif similaire.

7. Dispositif selon les revendications précédantes, **caractérisé en ce que** ledit réservoir (1) est monté sur un châssis de support (37) pourvu de roues.
